# EUROPÄISCHE PATENTSCHRIFT

(11) **EP 1 034 223 B1**
(45) Veröffentlichungstag und Bekanntmachung des Hinweises auf die Patenterteilung: **02.07.2003**
(21) Anmeldenummer: 98961163.7
(22) Anmeldetag: 09.11.1998
(51) Int. Cl.: C09D 4/00, C08F 222/32, C08F 2/44

(54) **STABILISIERTE CYANACRYLATKLEBSTOFFE**
STABILISED CYANOACRYLATE ADHESIVES
COLLES DE CYANO-ACRYLATE STABILISEES

(30) Priorität: 17.11.1997 DE 19750802
(43) Veröffentlichungstag der Anmeldung: 13.09.2000
(73) Patentinhaber: Henkel Kommanditgesellschaft auf Aktien, 40589 Düsseldorf (DE)
(72) Erfinder: MISIAK, Hanns-Roland, D-30974 Wennigsen (DE); BEHN, Dagmar, D-40627 Düsseldorf (DE)
(86) Internationale Anmeldenummer: EP9807149
(87) Internationale Veröffentlichungsnummer: WO99025774

(56) Entgegenhaltungen:
- EP-A- 0 538 734
- EP-A- 0 579 476

## Beschreibung

Die Erfindung betrifft Cyanacrylatklebstoffzubereitungen, die sich durch einen besonders günstigen Inhibitor gegen anionische Polymerisation auszeichnen.

Cyanacrylatklebstoffe sind Monomerklebstoffe. Sie basieren auf Estern der alpha-Cyanacrylsäure. Diese Ester können sowohl radikalisch wie anionisch polymerisiert werden. Dabei wird die anionische Polymerisation bereits durch Spuren von Feuchtigkeit ausgelöst, die auf fast allen Oberflächen anzutreffen sind. Cyanacrylatklebstoffe binden daher sehr schnell ab, wenn sie zwischen zwei unter Raumbedingungen gelagerte Oberflächen eingebracht werden.

In klebetechnischer Hinsicht ist gerade diese Reaktivität zum einen und die hohe erzielte Bindungsfestigkeit, insbesondere mit polaren Substraten, der besondere Vorteil dieser Klebstoffklassen. Zur Herstellung und Lagerung der Klebstoffe ist es allerdings erforderlich, Stabilisatorsysteme zuzusetzen. Die Stabilisatorsysteme müssen so eingestellt werden, daß bei Transport und Lagerung im geschlossenen Gebinde, auch bei erhöhten Temperaturen und langer Zeiträume die Polymerisation nicht auftritt, wo hingegen nach Anwendung eine sofortige Polymerisation einsetzt.

Neben den bekannten Inhibitoren für radikalische Polymerisation werden Cyanacrylatklebstoffen daher im allgemeinen Inhibitoren gegen anionische Polymerisation zugesetzt.

So wird in der deutschen Offenlegungsschrift 21 00 026 vorgeschlagen, als Inhibitor einen stark sauer wirkenden Kationenaustauscher zuzusetzen. Vorzugsweise sollen Kationenaustauscher auf Basis von sulfonsäuregruppenenthaltenden, vernetzten Polystyrolen eingesetzt werden. Nachteilig dabei ist, daß der zugesetzte Ionenaustauscher leicht den Ausfluß des Klebstoffes behindern kann und daß er als Feststoff nicht über das gesamte Klebstoffvolumen wirkt.

In der deutschen Patentanmeldung DE 41 09 105 wird vorgeschlagen, Gebinde, in denen Cyanacrylatklebstoffe gelagert werden, oberflächlich so zu modifizieren, daß sie Säuregruppen enthalten. Wenngleich dieser Vorschlag sich erfolgreich umsetzen läßt, so besteht auch hier das Problem, daß die Inhibitorwirkung nur in Nachbarschaft zu der Gebindewand auftritt.

Eine weitere Möglichkeit der Stabilisierung von Cyanacrylatklebstoffen besteht darin, daß man Schwefeldioxid als Inhibitor zusetzt. Wenngleich diese Maßnahme in der Praxis erfolgreich angewendet wird, so ist doch zu beachten, daß Schwefeldioxid eine gasförmige Substanz ist und daß die gleichmäßige Dosierung schwierig ist, wodurch Qualitätsschwankungen auftreten können. Weiterhin kann Schwefeldioxid bei der Lagerung durch Diffusion aus den Klebstoffgebinden entweichen.

Unabhängig von diesen Überlegungen wird in der europäischen Patentanmeldungen EP 579 476 vorgeschlagen, Cyanacrylatmonomeren zwischen 0,1 und 10 Gew.-% einer schwefelhaltigen oder auch cyclischen Verbindung zuzusetzen. Als Verbindungen werden cyclische, organische Sulfate, Sulfite, Sulfoxide, Sulfinate, z. B. 2-Oxo-1,3,2-dioxathiolane vorgeschlagen. Gemäß der europäischen Patentanmeldung sollen diese Stoffe in Mengen von 0,1 Gew.-% (1 000 ppm) bis 10 Gew.-% eingesetzt werden. Der Einsatzzweck ist die Anhebung der Ceilingtemperatur und damit eine Verbesserung der Wärmestabilität der Klebstoffe. Überlegungen, derartige Stoffe zur Stabilisierung der monomeren Klebstoffe gegen anionische Polymerisation einzusetzen, finden sich nicht in der genannten europäischen Patentanmeldung.

Vor diesem Hintergrund haben die Erfinder sich die Aufgabe gestellt, für monomere Cyanacrylatklebstoffe einen Inhibitor gegen anionische Polymerisation vorzuschlagen. Dieser Inhibitor sollte insbesondere über das gesamte Volumen des Klebstoffes wirksam sein und im Vergleich zu Gasen besser und einfacher dosiert werden können.

Eine weitere Aufgabe der Erfindung ist es, einen Inhibitor für Cyanacrylatklebstoffe zu schaffen, der es verhindert, daß die Abbindezeit sich über die Lagerdauer drastisch verlängert. Weiterhin sollen Verfärbungen des Klebstoffes bei der Lagerung verhindert werden.

Gegenstand der Erfindung ist damit ein Cyanacrylatklebstoff, enthaltend ein oder mehrere Cyanacrylsäureester in Mengen von 99,99 bis 90 Gew.-%, Inhibitoren gegen radikalische Polymerisation, Inhibitoren gegen anionische Polymerisation und gegebenenfalls übliche in derartigen Klebstoffsystemen eingesetzte Hilfsstoffe, dadurch gekennzeichnet, daß als Inhibitor gegen anionische Polymerisation 2-Oxo-1,3,2-dioxathiolane in Mengen von 50 bis 5000 ppm enthalten sind.

Die erfindungsgemäß als Inhibitoren gegen die anionische Polymerisation einzusetzenden 2-Oxo-1,3,2-dioxathiolane sind bekannte Verbindungen, die im Handel erhältlich sind. Vereinfacht kann man sie als Ester der Schwefligsäure mit vicinalen Dialkoholen auffassen. Unter den genannten 2-Oxo-1,3,2-dioxathiolanen sind solche Verbindungen bevorzugt, die mit ein oder mehreren Alkylgruppen substituiert sind. Geeignete Alkylgruppen haben eine Kettenlänge von 1 bis 8 C-Atomen. Eine besonders geeignete Substanz ist das 4,5-Dimethyl-2-oxo-1,3,2-dioxathiolan. Es handelt sich dabei um eine Flüssigkeit mit Siedepunkt von 185 °C.

Die erfindungsgemäß einzusetzen 2-Oxo-1,3,2-dioxathiolane werden in Mengen von 50 bis 5 000 ppm eingesetzt. Bevorzugt ist 100 bis 1 000 ppm einzusetzen, insbesondere 200 bis 700 ppm. Dabei richtet sich die Einsatzmenge insbesondere nach dem Bedarf an zu erzielender Stabilisierung, also zum Beispiel nach der Gebindegröße, nach dem Bedarf auch angebrochene Gebinde lagern zu können und dergleichen.

Die erfindungsgemäßen Cyanacrylatklebstoffe bestehen in der Hauptsache aus ein oder mehreren Estern der alpha-Cyanacrylsäure. Diese Ester haben die allgemeine Formel H₂C=C(CN)-COOR, in der R eine Alkyl-, Alkenyl-, Cycloalkyl-, Aryl-, Alkoxyalkyl-, Aralkyl- oder Haloalkylgruppe bedeutet, insbesondere eine Methyl-,Ethyl-, n-Propyl-, Iso-Propyl-, n-Butyl-, Pentyl-, Hexyl-, Allyl-, Methallyl-, Crotyl-, Propargyl-, Neopentyl-, Cyclohexyl-, Benzyl-, Phenyl-, Cresyl-, 2-Chlorethyl-, 3-Chlorpropyl-, 2-Chlorbutyl-, Trifluorethyl-, 2-Methoxyethyl-, 3-Methoxybutyl- und 2-Ethoxyethylgruppe ist. Die vorgenannten Cyanacrylate sind dem Klebstoffachmann bekannt, vergleiche Ullmann Encyclopaedia of Industrial Chemistry, Bd. Al, Seite 240, Verlag Chemie Weinheim (1985) sowie US-PS 3,254,111 und US-PS 3,654,340. Bevorzugte Monomere sind Methoxyethyl-, Ethoxyethyl-, Methyl-, Ethyl, Propyl- oder Butyl-Ester der 2-Cyanacrylsäure.

Die genannten Cyanacrylsäureester sind in den Klebstoffen in Mengen von 99,99 bis 90 Gew.-% enthalten. Bevorzugt sind Cyanacrylsäureester, deren Alkoholrest sich von Alkoholen mit 1 bis 10 C-Atomen ableitet, die auch cyclisch, verzweigt oder perfluoriert sein können.

Die erfindungsgemäßen Cyanacrylklebstoffe können weiterhin einen Inhibitor für die radikalische Polymerisation enthalten. Solche Inhibitoren sind zum Beispiel Chinone, Hydrochinone, p-Methoxyphenol, aber auch sterisch gehinderte Phenole, Phenothiazin und dergleichen.

Als weitere Hilfsstoffe können die erfindungsgemäßen Cyanacrylatklebstoffe auch Verdickungsmittel enthalten. Dies ist insbesondere dann gewünscht, wenn poröse Materialien verklebt werden sollen, die ansonsten den niedrig viskosen Klebstoff leicht aufsaugen. Als Verdicker können viele Arten von Polymeren verwendet werden, so zum Beispiel Polymethylmethacrylat, andere Methacrylatcopolymere, Acrylkautschuk, Cellulosederivate, Polyvinylacetat oder Polyalphacyanacrylat. Eine übliche Menge an Verdicker ist im allgemeinen ungefähr 20 Gew.-% oder weniger, bezogen auf den Gesamtklebstoff. Neben oder anstelle der Verdicker können die erfindungsgemäßen Cyanacrylatklebstoffe auch noch Verstärker enthalten. Beispiele für solche Verstärker sind Acrylelastomere, Acrylnitrilcopolymer, Elastomere oder Fluorelastomere. Darüber hinaus können auch anorganische ZuSätze zum Beispiel Silikate mit hoher Oberfläche, die vorzugsweise mit Polydialkylsiloxanen beschichtet sind, eingesetzt werden. Neben oder anstelle dieser Hilfsstoffe können weiterhin Bindebeschleuniger eingesetzt werden. Hier werden beispielsweise Kronenether oder Calixarene eingesetzt.

Die erfindungsgemäßen Cyanacrylatklebstoffe können weiterhin Stoffe zur Steigerung der thermischen Stabilität enthalten. Hierzu können beispielsweise die in EP 579 476 genannten Schwefelverbindungen eingesetzt werden.

Neben oder anstelle der genannten Additive können die erfindungsgemäßen Cyanacrylatklebstoffe auch noch Weichmacher enthalten. Diese dienen dazu, die erhaltene Klebeverbindung gegen Brüchigkeit zu schützen. Solche Weichmacher sind hier beispielsweise C₁- bis C₁₀-Alkylester zweibasischer Säuren, insbesondere der Sebacinsäure, Phthalsäure oder der Malonsäure. Andere Weichmacher sind Diarylether und Polyurethane und dergleichen. Schließlich können die erfindungsgemäßen Klebstoffzubereitungen auch noch Farbstoffe, Pigmente, Geruchsstoffe und dergleichen enthalten.

Mit Hilfe der vorgeschlagenen Inhibitoren gegen anionische Polymerisation lassen sich Cyanacrylatklebstoffzubereitungen schaffen, die selbst unter ungünstigen Bedingungen gegen vorzeitige Aushärtung geschützt sind.

### Beispiele

2-Cyanacrylsäureethylester wurde mit 400 ppm Hydrochinon als Inhibitor gegen radikalische Polymerisation versetzt. Weiterhin wurden als Inhibitoren gegen die anionische Polymerisation beigegeben:
Versuch 1:
   5 ppm Schwefeldioxid
Versuch 2:
   25 ppm Schwefeldioxid
Versuch 3:
   200 ppm 4,5-Dimethyl-2-oxo-1,3,2-dioxathiolan

Von allen drei Klebstoffen wurden Abbindezeiten gemessen. Die Messung wurde nach 8 Monaten wiederholt. Nach Herstellung der Proben lag die Abbindezeit unter Standardbedingungen zwischen 2 und 4 Sekunden. Nach Lagerung betrug die Abbindezeit 5 Sekunden für Versuch 1, 18 Sekunden für Versuch 2 und 3 bis 4 Sekunden für Versuch 3 (erfindungsgemäß).
Die Viskosität der Klebstoffproben lag in allen Fällen im akzeptablen Bereich.

### Versuchsergebnis:

Die eingesetzten SO₂-Konzentrationen führten über längere Zeit zu einer drastischen Verlängerung der Anpreßzeit. Demgegenüber ist dieser Effekt bei den erfindungsgemäß mit 4,5-Dimethyl-2-oxo-1,3,2-dioxatiolan stabilisierten Mustern praktisch nicht vorhanden. Dabei ist die Inhibitorwirkung, gemessen anhand des Viscositätsanstieges, mit der von Schwefeldioxid vergleichbar und die Viskosität bleibt konstant.

## Patentansprüche

1. Cyanacrylatklebstoffe, enthaltend einen oder mehrere Cyanacrylsäureester in Mengen von 99,99 bis 90 Gew.-%, Inhibitoren gegen radikalische Polymerisation, gegen anionische Polymerisation und gegebenenfalls übliche in derartigen Klebstoffsystemen eingesetzte Hilfsstoffe, **dadurch gekennzeichnet, daß** als Inhibitor gegen anionische Polymerisation 2-Oxo-1,3,2-dioxathiolane in Mengen von 50 bis 5 000 ppm enthalten sind.

2. Cyanacrylatklebstoffe nach Anspruch 1, **dadurch gekennzeichnet, daß** 2-Oxo-1,3,2-dioxathiolane eingesetzt werden, die in 4- oder 5-Stellung mit niedrigen Alkylgruppen substituiert sind, insbesondere 4,5-Dimethyl-2-oxo-1,3,2-dioxathiolan.

3. Cyanacrylatklebstoffe nach den Ansprüchen 1 oder 2, **dadurch gekennzeichnet, daß** die 2-Oxo-1,3,2-dioxathiolane in Mengen von 100 bis 1000 ppm und vorzugsweise 200 bis 700 ppm eingesetzt werden.

4. Cyanacrylatklebstoffe nach einem der Ansprüche 1 bis 3, **dadurch gekennzeichnet, daß** als 2-Cyanacrylester solche Ester eingesetzt werden, die sich von C₁- bis C₁₀-Alkoholen, welche auch cyclisch oder verzweigt oder perfluoriert sein können, ableiten.

5. Cyanacrylatklebstoffe nach den Ansprüchen 1 bis 4, **dadurch gekennzeichnet, daß** als weitere Hilfsstoffe Verdickungsmittel, Farbstoffe, Phasentransferkatalysatoren, Mittel zur Steigerung der Ceilingtemperatur oder dergleichen eingesetzt werden können.

## Claims

1. Cyanoacrylate adhesives containing one or more cyanoacrylates in quantities of 99,99 to 90 % by weight, inhibitors against radical polymerization, inhibitors against anionic polymerization and optionally typical auxiliaries used in such adhesive systems, **characterized in that** 2-oxo-1,3,2-dioxathiolanes are present in amounts from 50 to 5 000 ppm as the anionic polymerization inhibitor.

2. Cyanoacrylate adhesives as claimed in claim 1, **characterized in that** 2-oxo-1,3,2-dioxathiolanes substituted in the 4 or 5 position by lower alkyl groups, more particularly 4,5-dimethyl-2-oxo-1,3,2-dioxathiolane, are used.

3. Cyanoacrylate adhesive as claimed in claim 1 or 2, **characterized in that** the 2-oxo-1,3,2-dioxathiolanes are used in quantities of 100 to 1000 ppm and preferably in quantities of 200 to 700 ppm.

4. Cyanoacrylate adhesives as claimed in any of claims 1 to 3, **characterized in that** esters derived from C₁₋₁₀ alcohols which may even be cyclic, branched or perfluorinated are used as the 2-cyanoacrylates.

5. Cyanoacrylate adhesives as claimed in claims 1 to 4, **characterized in that** thickeners, dyes, phase transfer catalysts, auxiliaries for raising the ceiling temperature or the like may be used as further additives.

## Revendications

1. Colles de cyanoacrylates contenant un ou plusieurs esters d'acide cyanoacrylique en quantité de 99,99 à 90% en poids, des inhibiteurs contre la polymérisation radicalaire, contre la polymérisation anionique et le cas échéant des adjuvants mis en oeuvre habituellement dans des systèmes de colle de ce type , **caractérisées en ce que**
comme inhibiteur contre la polymérisation anionique, elles contiennent des 2-oxo-1,3,2-dioxathiolanes en quantités de 50 à 5000 ppm.

2. Colles de cyanoacrylates selon la revendication 1, **caractérisées en ce qu'**on met en oeuvre des 2-oxo-1,3,2-dioxathiolanes substitues en position 4 ou 5 avec des groupes alkyle inférieurs en particulier le 4,5-dimethyl- 2-oxo-1,3,2-dioxathiolane.

3. Colles de cyanoacrylates selon les revendications 1 ou 2, **caractérisées en ce que** les 2-oxo-1,3, 2-dioxathiolanes sont mis oeuvre en quantités allant de 100 à 1000 ppm et de préférence de 200 à 700 ppm.

4. Colles de cyanoacrylates selon l'une quelconque des revendications 1 à 3,
**caractérisées en ce que**
comme ester 2-cyanoacrylique, on met en oeuvre des esters qui dérivent d'alcools en C₁ à C₁₀ lesquels également peuvent être cycliques ou ramifiés ou perfluorés.

5. Colles de cyanoacrylates selon l'une quelconque des revendications 1 à 4,
**caractérisées en ce que**
comme adjuvant supplémentaire, on peut mettre en oeuvre des agents épaississants, des colorants, des catalyseurs de transfert de phase, des moyens pour augmenter la température de Ceiling ou analogue.
